# EUROPEAN PATENT SPECIFICATION

(11) **EP 3 228 448 B1**
(45) Date of publication and mention of the grant of the patent: **24.11.2021**
(21) Application number: 16163878.8
(22) Date of filing: 05.04.2016
(51) Int. Cl.: B32B 5/18, E04B 1/74

(54) **LINOLEUM-BASED SURFACE COVERING**
AUF LINOLEUM BASIERENDES OBERFLÄCHENBELAGSELEMENT
REVÊTEMENT DE RECOUVREMENT DE SURFACE

(43) Date of publication of application: 11.10.2017
(73) Proprietor: Tarkett GDL, 9779 Lentzweiler (LU)
(72) Inventor: LEONARDI, Ylenia, 9559 WILTZ (LU); BARTOLETTI, Antonella, 9559 WILTZ (LU)
(74) Representative: Aronova

(56) References cited:
- WO-A1-03/052196
- DE-A1- 3 339 454

## Description

### Field of the Invention

The invention generally relates to a linoleum-based surface covering (a decorative floor or wall covering) and to a method for producing such a surface covering.

### Background of the Invention

Surface coverings, particularly linoleum surface coverings, are widely used to decorate surfaces in buildings or houses. Linoleum is often marketed in the form of sheets (in rolls), but also in the form of tiles, which some people consider easier to install than sheets.

Linoleum surface coverings are made by calendering of a linoleum paste on a fibrous backing (typically made of jute). The linoleum paste generally comprises organic filler material such as, e.g., ground cork and/or wood flour, optionally a mineral filler material such as, e.g., ground limestone, and a linoleum cement. The linoleum cement comprises vegetable oil, e.g. oxidised linseed and/or soybean oil, and rosin or copal. The linoleum paste may also comprise additives such as pigments.

However, linoleum surface coverings present the drawback of having modest acoustic isolation properties in comparison with synthetic (polymer-based) surface coverings.

To address this issue, it is possible to lay out a footfall insulation underlay before the linoleum in installed. As this requires laying out an additional layer, installation of the surface covering as a whole is rendered more complicated and time-consuming.

WO 2011/160668 discloses a linoleum-based multilayer surface covering comprising a linoleum-based layer with a first backing layer made from jute and a second backing layer, which is provided as polymer-based layer on the underside of the jute layer. The polymer-based layer may be a PVC-based layer, a polypropylene-based layer or a polyester-based (e.g. polylactic acid-based) layer.

WO 2014/067570 relates to a linoleum-based surface covering element, comprising a support layer that carries a linoleum-based wear layer. The support layer comprises a cork-based layer and a first fabric layer. The wear layer comprising a linoleum-based layer and a second fabric layer. The wear layer and the support layer are joined by an adhesive layer that contacts the first and second fabric layers.

DE 33 39 454 A1 discloses a thermal and impact sound insulating material consisting of a thermal insulating layer of polyurethane rigid foam and an impact sound insulating layer on one or both sides. The impact sound insulating material could be, amongst others, cork linoleum.

WO 03/052196 A1 relates to a floor covering based on linoleum and having flame-retardant properties, comprising at least one wear layer made of linoleum. The wear layer contains at least one phosphorous-containing compound, solution, suspension or dispersion serving as a flameproofing agent. The invention also relates to a method for producing such a floor covering.

### Summary of the Invention

According to a first aspect of the invention, a linoleum-based decorative floor or wall covering (hereinafter also referred to as: linoleum-based multilayer surface covering) comprises a linoleum layer and a polyurethane foam underlay. The linoleum layer comprises linoleum cement, organic and/or inorganic filler material and, optionally, pigment, on a fibrous backing layer. The polyurethane foam underlay comprises polyurethane foam shreds bonded together and is bonded to the fibrous backing layer of the linoleum layer by an adhesive layer.

According to an embodiment, the polyurethane foam underlay has a density comprised in the range from 120 kg/m³ to 400 kg/m³, preferably in the range from 170 kg/m³ to 300 kg/m³.

The linoleum-based multilayer surface covering is preferably configured, in terms of thickness, density and size of the polyurethane foam shreds, such that it provides an impact sound reduction of at least 20 dB, more preferably of at least 21 dB, according to norms EN ISO 10140-3 and EN ISO 717-2. Unless otherwise specified, any reference to a norm used herein is a reference to the version of the norm in force on the date of filing or, if this patent (application) claims priority from an earlier filed patent application, to the version of the norm in force on the date of filing of that earlier application.

According to an embodiment, the linoleum layer has a thickness comprised in the range from 1.5 to 4 mm and the polyurethane foam underlay has a thickness in the range from 1.5 to 3 mm. Preferably the overall thickness of the linoleum-based multilayer surface covering amounts to a value in the range from 3 mm to 7 mm, the range from 3.5 to 5 mm being especially preferred.

Independently from the linoleum layer, the polyurethane foam underlay has a thickness comprised preferably in the range from 1.5 to 3 mm and more preferably in the range from 1.8 to 2.5 mm.

The linoleum-based multilayer surface covering preferably combines the features of (a) a 21 dB or greater impact sound reduction according to norms EN ISO 10140-3 and EN ISO 717-2 (b) the polyurethane foam underlay having a thickness of 2 mm with a tolerance of 0.2 mm.

According to an embodiment, the polyurethane foam underlay has a tensile strength of at least 200 kPa and an ultimate elongation of at least 30% when measured in accordance with norm EN ISO 1798.

The linoleum layer may, for instance, comprise ground cork and/or wood flour as organic filler material, calcium carbonate as inorganic (mineral) filler material, one or more pigments (e.g. titanium dioxide) and a jute backing as the fibrous backing. The fibrous backing of the linoleum layer could be any of a woven fabric, a non-woven layer (e.g. a felt), and a layer comprising woven as well as non-woven parts. The linoleum layer as such preferably satisfies the norm EN ISO 24011.

According to an embodiment, the linoleum-based multilayer surface covering is a decorative floor covering. Preferably, the linoleum layer is over-coated with a transparent top layer, e.g. made of polyurethane or an acrylic-based polymer.

According to an embodiment, the polyurethane foam underlay consists of the polyurethane foam shreds bonded together by binder, and, optionally, filler material.

According to an embodiment, the binder used for binding the polyurethane foam shreds comprises diisocyanate moieties and/or isocyanate-reactive moieties, such as, e.g., polyols, polyamines, amine-terminated polyols and polymercaptans. For instance, the diisocyanate moieties could include methylene diphenyldiisocyanate or polymethylene polyphenyl polyisocyanate, toluene diisocyanate, etc. The isocyanate-reactive moieties could include adducts of ethylene glycol, propylene glycol, 1,3-dihydroxypropane, glycerol, 1,2,4-trihydroxybutane, 1,4-dihydroxybutane, 1,1,1-trimethylolpropane, 1,2,6-trihydroxyhexane, 1,1,1-trimethylolethane, polycaprolactone, arabitol, xylitol, sorbitol, mannitol, polyester polyols, polybutanediol adipate, etc.

According to an embodiment, the linoleum-based multilayer surface covering is a decorative floor covering combining the features of (a) providing an impact sound reduction of at least 21 dB according to norms EN ISO 10140-3 and EN ISO 717-2, (b) the linoleum layer comprising ground cork and/or wood flour as organic filler material, calcium carbonate as inorganic filler material, one or more pigments, and a jute backing as the fibrous backing, (c) the polyurethane foam underlay having a density comprised in the range from 170 kg/m³ to 300 kg/m³, and (d) the polyurethane foam underlay having a thickness comprised in the range from 1.8 to 2.5 mm, preferably of 2 mm with a tolerance of 0.2 mm.

The adhesive layer bonding the polyurethane foam underlay to the fibrous backing layer of the linoleum layer could be any of a hotmelt adhesive, a spray glue, double-sided adhesive tape, and spread glue.

The linoleum-based multilayer surface covering could be customized in the form of tiles, or alternatively, in the form of rolls.

### Brief Description of the Drawings

The accompanying drawings illustrate several aspects of the present invention and, together with the detailed description, serve to explain the principles thereof. In the drawings:
Fig. 1: is a cross-sectional view schematic drawing of a linoleum-based decorative surface covering according to an embodiment of the invention;
Fig. 2: is a schematic illustration how a linoleum layer and a polyurethane foam underlay can be joined to form a linoleum-based decorative surface covering as shown in Fig. 1.

### Detailed Description of Preferred Embodiments

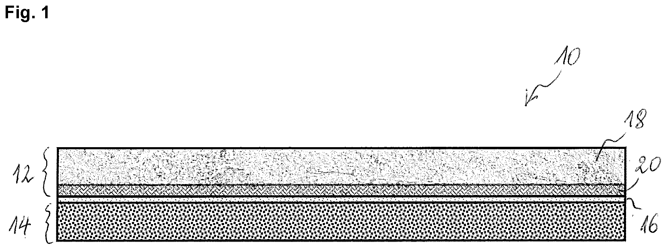

As shown in Fig. 1, a linoleum-based decorative surface covering 10 according to an embodiment of the present invention comprises a linoleum layer 12 and a polyurethane foam underlay 14, joined together by an adhesive layer 16.

The linoleum layer 12 comprises linoleum paste 18 calendered on a fibrous backing 20. The polyurethane foam underlay 14 comprises polyurethane shreds that are firmly bonded together by polyurethane binder.

The linoleum layer 12 may comprise any suitable linoleum paste 18. The fibrous backing 20 advantageously comprises a jute backing. The linoleum paste 18 may, e.g. comprise ground cork and wood flour as organic filler material, calcium carbonate as mineral filler material, and pigment(s). The linoleum layer 12 may also comprise a transparent finishing top layer (not shown), e.g. made of polyurethane or an acrylic-based polymer.

The polyurethane foam shreds of the polyurethane foam underlay 14 may be obtained by shredding recycled polyurethane foam pieces. The recycled polyurethane foam may be from any suitable source, e.g. offcuts from polyurethane foam production or obtained from the recycling of consumer products (e.g. mattresses, car seat cushioning, PU-based thermal insulation material, etc.)

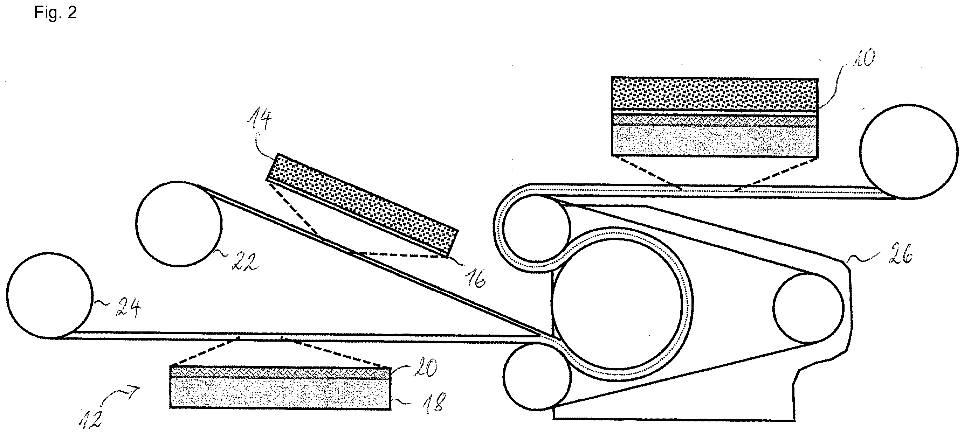

The process to produce a linoleum-based surface covering 10 according to the present invention comprises providing the linoleum layer 12 and the polyurethane foam underlay 14 and joining them, preferably by lamination as shown in Fig. 2.

The linoleum layer 12 may be provided by producing a linoleum paste and a fibrous backing, calendering the linoleum paste on the fibrous backing jute backing, and curing the linoleum paste.

The polyurethane foam underlay 14 may be provided by providing recycled polyurethane foam, shredding the recycled polyurethane foam, admixing polyurethane binder to the polyurethane foam shreds and introducing the mixture of shreds and binder into a double-belt press, wherein the mixture is cured under the action of heat and water steam.

The adhesive layer 16 used to bond the polyurethane foam underlay 14 to the linoleum layer 12 is preferably prearranged on the polyurethane foam underlay 14 and protected by a release liner (not shown) before the polyurethane foam underlay 14 and the linoleum layer 12 are actually joined. The adhesive layer 16 is preferably provided in the form of double-sided pressure-sensitive tape.

The joining step preferably comprises introducing the polyurethane foam underlay 14 and the linoleum layer 12 from their respective rolls 22, 24 into a rotary press 26 (e.g. of the type of KraussMaffei Berstorff's AUMA) or into a press with opposite cylinders. If the adhesive layer 16 has been pre-arranged on the polyurethane foam underlay and is covered with a release liner, the latter is removed ahead of the press (step not shown in Fig. 2). Alternatively, the adhesive is applied in situ on either the polyurethane foam underlay 14 or the backside of the linoleum layer 12.

The polyurethane foam underlay 14 and the linoleum layer 12 are preferably joined under a pressure of between 50 and 180 bar and at room temperature (about 20°C). The line speed could be, for instance, between 2 and 15 m/minute.

The production process may comprise a step of cutting the linoleum-based surface covering 10 into tiles of any suitable dimension.

Preferably, the polyurethane foam underlay comprising the adhesive tape and the linoleum layer are stored on separate rolls. That way, the same quality of linoleum can be offered in two or more variants: as a "naked" linoleum layer (without any acoustic insulation underlay) and as a linoleum-based multilayer surface covering according to the invention. Upon receipt of a customer's order for a linoleum-based multilayer surface covering according to the invention, the letter may be produced within a short time using the prefabricated rolls of the polyurethane foam underlay and of the linoleum layer.

### Example 1

A linoleum-based multilayer surface covering according to an embodiment of the invention was manufactured by laminating a linoleum layer having a thickness of 2.5 mm on a polyurethane foam underlay having a thickness of 2 mm using a double-sided adhesive tape. The linoleum layer was obtained by calendering a linoleum paste comprising 40 %wt. linoleum cement (80 %wt. oxidized linseed oil and 20 %wt. rosin), 40 %wt. organic filler (cork and wood flour), 15 %wt. ground limestone and 5 %wt. pigment (TiO₂) on a jute backing having a surface density of 260 g/m². The polyurethane foam underlay was obtained by bonding recycled polyurethane shreds (obtained by shredding offcuts of virgin PU foam production) with polyurethane binder using a double-belt press. The resulting polyurethane foam underlay had a thickness of 2 mm and a surface density of 400 g/m². The double-sided adhesive tape was pre-arranged on the polyurethane foam underlay prior to joining it with the linoleum layer. Polyurethane foam underlay and linoleum layer were joined in an AUMA rotary press. The contact pressure between cylinder and the steel tape amounted to 150 bars and the temperature was about 20°C. The line speed was approximately 5 m/min. The surface density of the resulting linoleum-based linoleum-based multilayer surface covering amounted to something more than 3400 g/m². Overall thickness was 4.3 mm. The linoleum-based linoleum-based multilayer surface covering showed impact sound reduction of 21 dB (at 21°C and 54% relative humidity) measured in accordance with norms EN ISO 10140-3 and EN ISO 717-2.

### Example 2 (comparative)

The impact sound reduction measurement was repeated with the bare linoleum layer of example 1. In the same measurement conditions, the impact sound reduction was found to be 6.

## Claims

1. A linoleum-based multilayer decorative wall or floor covering (10) comprising:
o a linoleum layer (12), said linoleum layer comprising linoleum cement, organic and/or inorganic filler material and pigment, on a fibrous backing layer (20),
o a polyurethane foam underlay (14) comprising polyurethane foam shreds bonded together, said polyurethane foam underlay being bonded to said fibrous backing layer by an adhesive layer (16).

2. The linoleum-based multilayer decorative wall or floor covering (10) as claimed in claim 1, wherein said polyurethane foam underlay (14) has a density comprised in the range from 120 kg/m³ to 400 kg/m³, preferably in the range from 170 kg/m³ to 300 kg/m³.

3. The linoleum-based multilayer decorative wall or floor covering (10) as claimed in claim 1 or 2, providing an impact sound reduction of at least 20 dB according to norms EN ISO 10140-3 and EN ISO 717-2.

4. The linoleum-based multilayer decorative wall or floor covering (10) as claimed in any one of claims 1 to 3, providing an impact sound reduction of at least 21 dB according to norms EN ISO 10140-3 and EN ISO 717-2.

5. The linoleum-based multilayer decorative wall or floor covering (10) as claimed in any one of claims 1 to 4, wherein the linoleum layer (12) has a thickness comprised in the range from 1.5 to 4 mm and wherein the polyurethane foam underlay (14) has a thickness in the range from 1.5 to 3 mm.

6. The linoleum-based multilayer decorative wall or floor covering (10) as claimed in any one of claims 1 to 5, wherein the polyurethane foam underlay (14) has a thickness comprised in the range from 1.8 to 2.5 mm.

7. The linoleum-based multilayer decorative wall or floor covering (10) as claimed in claim 1 or 2, providing an impact sound reduction of at least 21 dB according to norms EN ISO 10140-3 and EN ISO 717-2, wherein the polyurethane foam underlay (14) has a thickness of 2 mm with a tolerance of 0.2 mm.

8. The linoleum-based multilayer decorative wall or floor covering (10) as claimed in any one of claims 1 to 7, wherein the polyurethane foam underlay (14) has a tensile strength of at least 200 kPa and an ultimate elongation of at least 30% when measured in accordance with norm EN ISO 1798.

9. The linoleum-based multilayer decorative wall or floor covering (10) as claimed in any one of claims 1 to 8, wherein the linoleum layer (12) comprises ground cork and/or wood flour as organic filler material, calcium carbonate as inorganic filler material, one or more pigments and wherein the fibrous backing (20) is a jute backing.

10. The linoleum-based multilayer decorative wall or floor covering (10) as claimed in any one of claims 1 to 9, wherein the polyurethane foam underlay (14) consists of said polyurethane foam shreds bonded together by a binder and, optionally, filler material.

11. The linoleum-based multilayer decorative wall or floor covering (10) as claimed in claim 10, wherein said binder used for binding said polyurethane foam shreds comprises diisocyanate moieties and isocyanate-reactive moieties.

12. The linoleum-based multilayer decorative wall or floor covering (10) as claimed in claim 1, wherein the linoleum-based multilayer decorative wall or floor covering provides an impact sound reduction of at least 21 dB according to norms EN ISO 10140-3 and EN ISO 717-2, wherein the linoleum layer (12) comprises ground cork and/or wood flour as organic filler material, calcium carbonate as inorganic filler material, one or more pigments, wherein the fibrous backing (20) is a jute backing, wherein the polyurethane foam underlay (14) has a density comprised in the range from 170 kg/m³ to 300 kg/m³, and wherein the polyurethane foam underlay (14) has a thickness comprised in the range from 1.8 to 2.5 mm.

13. The linoleum-based multilayer decorative wall or floor covering (10) as claimed in claim 12, wherein the thickness of the polyurethane foam underlay (14) is 2 mm with a tolerance of 0.2 mm.

## Patentansprüche

1. Auf Linoleum basierendes mehrschichtiges dekoratives Wand- oder Bodenbelagselement (10), umfassend:
o eine Linoleumschicht (12), wobei die Linoleumschicht Linoleumzement, organisches und/oder anorganisches Füllstoffmaterial und Pigment umfasst, auf einer Faserstoffrückenschicht (20),
o eine Polyurethanschaumunterlage (14), umfassend aneinander gebundene Polyurethanschaumschnitzel, wobei die Polyurethanschaumunterlage mittels einer Klebeschicht (16) an die Faserstoffrückenschicht gebondet ist.

2. Auf Linoleum basierendes mehrschichtiges dekoratives Wand- oder Bodenbelagselement (10) nach Anspruch 1, wobei die Polyurethanschaumunterlage (14) eine Dichte im Bereich von 120 kg/m³ bis 400 kg/m³, vorzugsweise im Bereich von 170 kg/m³ bis 300 kg/m³ hat.

3. Auf Linoleum basierendes mehrschichtiges dekoratives Wand- oder Bodenbelagselement (10) nach Anspruch 1 oder 2, das eine Trittschallreduktion von mindestens 20 dB gemäß den Normen EN ISO 10140-3 und EN ISO 717-2 bereitstellt.

4. Auf Linoleum basierendes mehrschichtiges dekoratives Wand- oder Bodenbelagselement (10) nach einem der Ansprüche 1 bis 3, das eine Trittschallreduktion von mindestens 21 dB gemäß den Normen EN ISO 10140-3 und EN ISO 717-2 bereitstellt.

5. Auf Linoleum basierendes mehrschichtiges dekoratives Wand- oder Bodenbelagselement (10) nach einem der Ansprüche 1 bis 4, wobei die Linoleumschicht (12) eine Dicke hat, die im Bereich von 1,5 bis 4 mm liegt, und wobei die Polyurethanschaumunterlage (14) eine Dicke im Bereich von 1,5 bis 3 mm hat.

6. Auf Linoleum basierendes mehrschichtiges dekoratives Wand- oder Bodenbelagselement (10) nach einem der Ansprüche 1 bis 5, wobei die Polyurethanschaumunterlage (14) eine Dicke im Bereich von 1,8 bis 2,5 mm hat.

7. Auf Linoleum basierendes mehrschichtiges dekoratives Wand- oder Bodenbelagselement (10) nach Anspruch 1 oder 2, das eine Trittschallreduktion von mindestens 21 dB gemäß den Normen EN ISO 10140-3 und EN ISO 717-2 bereitstellt, wobei die Polyurethanschaumunterlage (14) eine Dicke von 2 mm mit einer Toleranz von 0,2 mm aufweist.

8. Auf Linoleum basierendes mehrschichtiges dekoratives Wand- oder Bodenbelagselement (10) nach einem der Ansprüche 1 bis 7, wobei die Polyurethanschaumunterlage (14) eine Zugfestigkeit von mindestens 200 kPa und eine Reißdehnung von mindestens 30 % aufweist, gemessen gemäß der Norm EN ISO 1798.

9. Auf Linoleum basierendes mehrschichtiges dekoratives Wand- oder Bodenbelagselement (10) nach einem der Ansprüche 1 bis 8, wobei die Linoleumschicht (12) gemahlenen Kork und/oder Holzmehl als organisches Füllstoffmaterial, Calciumcarbonat als anorganisches Füllstoffmaterial, ein oder mehrere Pigmente umfasst, und wobei der Faserstoffrücken (20) ein Juterücken ist.

10. Auf Linoleum basierendes mehrschichtiges dekoratives Wand- oder Bodenbelagselement (10) nach einem der Ansprüche 1 bis 9, wobei die Polyurethanschaumunterlage (14) aus den Polyurethanschnitzeln, die durch ein Bindemittel aneinander gebondet sind, und gegebenenfalls Füllstoffmaterial besteht.

11. Auf Linoleum basierendes mehrschichtiges dekoratives Wand- oder Bodenbelagselement (10) nach Anspruch 10, wobei das zum Binden der Polyurethanschaumschnitzel verwendete Bindemittel Diisocyanatanteile und mit Isocyanat reaktive Anteile umfasst.

12. Auf Linoleum basierendes mehrschichtiges dekoratives Wand- oder Bodenbelagselement (10) nach Anspruch 1, wobei das auf Linoleum basierende mehrschichtige dekorative Wand- oder Bodenbelagselement eine Trittschallreduktion von mindestens 21 dB gemäß den Normen EN ISO 10140-3 und EN ISO 717-2 bereitstellt, wobei die Linoleumschicht (12) gemahlenen Kork und/oder Holzmehl als organisches Füllstoffmaterial, Calciumcarbonat als anorganisches Füllstoffmaterial, ein oder mehrere Pigmente umfasst, wobei der Faserstoffrücken (20) ein Juterücken ist, wobei die Polyurethanschaumunterlage (14) eine Dichte hat, die im Bereich von 170 kg/m³ bis 300 kg/m³ liegt, und wobei die Polyurethanschaumunterlage (14) eine Dicke hat, die im Bereich von 1,8 bis 2,5 mm liegt.

13. Auf Linoleum basierendes mehrschichtiges dekoratives Wand- oder Bodenbelagselement (10) nach Anspruch 12, wobei die Dicke der Polyurethanschaumunterlage (14) 2 mm mit einer Toleranz von 0,2 mm beträgt.

## Revendications

1. Revêtement (10) de paroi ou de sol décoratif multicouche à base de linoléum comprenant :
o une couche de linoléum (12), ladite couche de linoléum comprenant une colle à linoléum, un matériau de charge organique et/ou inorganique et un pigment, sur une couche de support fibreuse (20),
o une sous-couche de mousse de polyuréthane (14) comprenant des morceaux de mousse de polyuréthane liés ensemble, ladite sous-couche de mousse de polyuréthane étant liée à ladite couche de support fibreuse par une couche d'adhésif (16).

2. Revêtement (10) de paroi ou de sol décoratif multicouche à base de linoléum selon la revendication 1, ladite sous-couche de mousse de polyuréthane (14) possédant une densité comprise dans la plage de 120 kg/m³ à 400 kg/m³, préférablement dans la plage de 170 kg/m³ à 300 kg/m³.

3. Revêtement (10) de paroi ou de sol décoratif multicouche à base de linoléum selon la revendication 1 ou 2, fournissant une réduction du bruit d'impact d'au moins 20 dB selon les normes EN ISO 10140-3 et EN ISO 717-2.

4. Revêtement (10) de paroi ou de sol décoratif multicouche à base de linoléum selon l'une quelconque des revendications 1 à 3, fournissant une réduction du bruit d'impact d'au moins 21 dB selon les normes EN ISO 10140-3 et EN ISO 717-2.

5. Revêtement (10) de paroi ou de sol décoratif multicouche à base de linoléum selon l'une quelconque des revendications 1 à 4, la couche de linoléum (12) possédant une épaisseur comprise dans la plage de 1,5 à 4 mm et la sous-couche de mousse de polyuréthane (14) possédant une épaisseur dans la plage de 1,5 à 3 mm.

6. Revêtement (10) de paroi ou de sol décoratif multicouche à base de linoléum selon l'une quelconque des revendications 1 à 5, la sous-couche de mousse de polyuréthane (14) possédant une épaisseur comprise dans la plage de 1,8 à 2,5 mm.

7. Revêtement (10) de paroi ou de sol décoratif multicouche à base de linoléum selon la revendication 1 ou 2, fournissant une réduction du bruit d'impact d'au moins 21 dB selon les normes EN ISO 10140-3 et EN ISO 717-2, la sous-couche de mousse de polyuréthane (14) possédant une épaisseur de 2 mm avec une tolérance de 0,2 mm.

8. Revêtement (10) de paroi ou de sol décoratif multicouche à base de linoléum selon l'une quelconque des revendications 1 à 7, la sous-couche de mousse de polyuréthane (14) possédant une résistance à la traction d'au moins 200 kPa et une élongation ultime d'au moins 30 % lorsqu'elle est mesurée conformément à la norme EN ISO 1798.

9. Revêtement (10) de paroi ou de sol décoratif multicouche à base de linoléum selon l'une quelconque des revendications 1 à 8, la couche de linoléum (12) comprenant du liège broyé et/ou de la farine de bois en tant que matériau de charge organique, du carbonate de calcium en tant que matériau de charge inorganique, un ou plusieurs pigments et le support fibreux (20) étant un support de jute.

10. Revêtement (10) de paroi ou de sol décoratif multicouche à base de linoléum selon l'une quelconque des revendications 1 à 9, la sous-couche de mousse de polyuréthane (14) étant constituée desdits morceaux de mousse de polyuréthane liés ensemble par un liant et, éventuellement, d'un matériau de charge.

11. Revêtement (10) de paroi ou de sol décoratif multicouche à base de linoléum selon la revendication 10, ledit liant utilisé pour lier lesdits morceaux de mousse de polyuréthane comprenant des fragments de type diisocyanate et des fragments réactifs avec isocyanate.

12. Revêtement (10) de paroi ou de sol décoratif multicouche à base de linoléum selon la revendication 1, le revêtement de paroi ou de sol décoratif multicouche à base de linoléum fournissant une réduction du bruit d'impact d'au moins 21 dB selon les normes EN ISO 10140-3 et EN ISO 717-2, la couche de linoléum (12) comprenant du liège broyé et/ou de la farine de bois en tant que matériau de charge organique, du carbonate de calcium en tant que matériau de charge inorganique, un ou plusieurs pigments, le support fibreux (20) étant un support de jute, la sous-couche de mousse de polyuréthane (14) possédant une densité comprise dans la plage de 170 kg/m³ à 300 kg/m³, et la sous-couche de mousse de polyuréthane (14) possédant une épaisseur comprise dans la plage de 1,8 à 2,5 mm.

13. Revêtement (10) de paroi ou de sol décoratif multicouche à base de linoléum selon la revendication 12, l'épaisseur de la sous-couche de mousse de polyuréthane (14) étant de 2 mm avec une tolérance de 0,2 mm.
